# EUROPEAN PATENT SPECIFICATION

(11) **EP 2 163 158 B1**
(45) Date of publication and mention of the grant of the patent: **16.03.2011**
(21) Application number: 09168363.1
(22) Date of filing: 21.08.2009
(51) Int. Cl.: A23G 9/32

(54) **Frozen confection**
Gefrorene Süßwaren
Confection surgelée

(30) Priority: 11.09.2008 EP 08164124
(43) Date of publication of application: 17.03.2010
(73) Proprietor: Unilever PLC, London EC4Y 0DY (GB); Unilever N.V., 3013 AL Rotterdam (NL)
(72) Inventor: Wix, Loyd, Bedford, Bedfordshire MK44 1LQ (GB)
(74) Representative: Clarke, Christopher John

(56) References cited:
- GB-A- 1 196 286
- US-A- 3 615 718
- US-A- 4 143 172
- US-A- 4 542 035
- US-B2- 7 279 152

## Description

### Technical Field of the invention

The present invention relates to frozen confections such as water ices, fruit ices, sorbets and the like. In particular, the present invention relates to frozen confections which are "tooth-friendly".

### Background to the invention

Water ices, fruit ices, sorbets and similar products are often designed for children. These products generally do not contain milk protein. They are typically fruit-flavoured and therefore contain acids such as citric acid or malic acid, and normally have a pH of about 4 or below. However, parents are reluctant to let their children consume such products since acids are known to be damaging to teeth. This is due to the demineralization of hydroxyapatite, a major constituent of tooth enamel. In low pH environments the hydroxyapatite molecules dissociate and calcium and phosphate ions are lost according to the following equation:

Ca₁₀(PO₄)₆(OH)₂ + 8H⁺ → 10Ca²⁺(aq) + 6HPO₄²⁻(aq) + 2H₂O

Simply raising the pH of the product is not satisfactory since although this reduces demineralization of tooth enamel, it creates another problem, namely that the frozen confection loses its characteristic acidic taste and palatability.

It has been proposed to add sources of calcium and / or phosphate ions to acidic foods and drinks in order to reduce tooth damage. For example, US 7 279 152 discloses acidic oral compositions, in particular beverages, which contain polyphosphate optionally in combination with a calcium salt in order to reduce tooth damage. Nonetheless, there remains a need for improved acidic frozen confections that are more "tooth-friendly".

### Brief Description of the Invention

We have identified for the first time a further specific problem that exists when adding a source of calcium ions to frozen confections which contain citric and / or malic acid. Calcium salts of weak acids, such as lactic acid or phosphoric acid, react with the acid present in the frozen confection. For example, calcium lactate reacts with citric acid to form lactic acid and calcium citrate. This results in an undesirable taste caused by the lactic acid and also reduced levels of calcium ions in the mouth because calcium citrate is poorly soluble. We have now found that damage to teeth caused by acidic frozen confections can be reduced whilst retaining the desired organoleptic properties of the frozen confection by selecting a particular calcium salt. Accordingly, in a first aspect, the invention provides a frozen confection having a pH of from 2.7 to 4.7 and comprising (by weight of the confection):
- at most 1.0 wt% milk protein;
- 0.1 to 5.0 wt% of calcium sulphate; and
- 0.1 to 5.0 wt% of citric acid or malic acid or a mixture thereof.

Frozen confections comprising calcium sulphate (CaSO₄) produce a high concentration of calcium ions in the mouth since calcium sulphate is highly soluble in water. In addition, calcium sulphate is the salt of a strong acid (sulphuric acid) and therefore does not react with citric / malic acid present in the frozen confection. Calcium sulphate has further advantages over other calcium salts which have been previously suggested for use in acidic food compositions. For example, calcium chloride is not suitable for frozen confections since it imparts a salty taste; nor is calcium nitrate since it results in food products which contain high nitrate levels. Calcium hydroxide, calcium carbonate and calcium hydrogen carbonate all react with organic acids which results in an increased pH which reduces the perception of acidic taste and can cause undesirable generation of gas.

Preferably, the frozen confection comprises from 0.01 to 1.0 wt% of a phosphate salt, more preferably from 0.02 to 0.1 wt%. Preferably the phosphate salt is a sodium phosphate, a potassium phosphate or a mixture thereof.

Preferably, the frozen confection has a pH of from 2.8 to 4.0.

Preferably, the frozen confection comprises from 0.15 to 1.0 wt% calcium sulphate.

Preferably, the frozen confection comprises citric acid or malic acid or a mixture thereof in an amount of from 0.15 to 3.0 wt%.

Preferably the frozen confection comprises at most 1.0 wt% fat.

Preferably, the frozen confection is a water ice, fruit ice or sorbet.

In a related aspect, the invention provides a process for manufacturing a frozen confection according to the first aspect of the invention, the process comprising the steps of:
(a) preparing a mix having a pH of from 2.7 to 4.7 and comprising at most 1.0 wt% milk protein, 0.1 to 5.0 wt% of calcium sulphate and 0.1 to 5.0 wt% of citric acid or malic acid or a mixture thereof;
(b) pasteurising and optionally homogenising the mix; then
(c) freezing and optionally aerating the mix to produce the frozen confection.

### Detailed Description of the Invention

Unless defined otherwise, all technical and scientific terms used herein have the same meaning as commonly understood by one of ordinary skill in the art. Definitions and descriptions of various terms and techniques used in frozen confectionery manufacture are found in Ice Cream, 6th Edition, R. T. Marshall, H. D. Goff and R. W. Hartel (2003), Kluwer Academic/Plenum Publishers. All percentages, unless otherwise stated, refer to the percentage by weight.

The frozen confection of the invention is preferably a water ice, a fruit ice or a sorbet. Water ice typically contains 15-25 wt% sugars / sweeteners / sugar replacers, together with stabilisers, colours and flavourings. Fruit ices are similar to water ices but also contain at least 10% fruit. Fruit means the edible part of fruit or the equivalent as juice, extracts, concentrated or dehydrated products and so on. Fruit, pulp, juice or any other preparation may be used either fresh or preserved. Sorbets are aerated products. In addition to the ingredients present in water ices and fruit ices, they typically contain a whipping or aerating agent. Proteins (e.g. milk protein) are generally not present in water ices, fruit ices and sorbets, except in small amounts as stabilisers (e.g. gelatin) or aerating agents (e.g. hydrolysed whey protein). Accordingly, the frozen confection comprises at most 1 wt%, more preferably at most 0.5 wt% and most preferably no milk protein. Fats are generally not present in water ices, fruit ices and sorbets. Accordingly, the frozen confection preferably comprises at most 1 wt%, more preferably at most 0.5 wt% and most preferably no fat.

The pH of the frozen confection means the pH when in liquid form, e.g. as an unfrozen mix or after melting, measured at room temperature (18°C). Water ices, fruit ices and sorbets typically have a low pH in order to provide favourable organoleptic properties such as acidic taste and palatability. If the pH is too high, the organoleptic perception of acidity is reduced. Accordingly the frozen confection has a pH of at most 4.7, preferably at most 4.0, more preferably at most 3.4. The frozen confection has a pH of at least 2.7, preferably at least 2.8, more preferably at least 3.0.

The frozen confection comprises up to 5 wt%, preferably up to 1 wt%, more preferably up to 0.4 wt% of calcium sulphate. The calcium sulphate is present in an amount of at least 0.1 wt%, preferably at least 0.15 wt% and more preferably at least 0.2 wt%.

The frozen confection comprises up to 5 wt%, preferably up to 3 wt%, more preferably up to 1 wt% of citric acid or malic acid or a mixture thereof. The citric acid or malic acid or a mixture thereof is present in an amount of at least 0.1 wt%, preferably at least 0.15 wt% and more preferably at least 0.2 wt%.

The frozen confection preferably comprises up to 1 wt%, more preferably up to 0.1 wt%, most preferably up to 0.05 wt% of a phosphate salt. The phosphate salt is preferably present in an amount of at least 0.01 wt%, more preferably at least 0.02 wt%, most preferably at least 0.03 wt%. Phosphate salts are defined as simple salts of phosphoric acid comprising one or more cations and one or two phosphate ions (PO₄³⁻). Suitable phosphate salts include tri-sodium phosphate, di-sodium hydrogenphosphate, sodium dihydrogenphosphate, tri-potassium phosphate, di-potassium hydrogenphosphate, and potassium dihydrogenphosphate. Mixtures of the phosphate salts may be used. The phosphate salt is preferably highly soluble in water so that the frozen confection contains a high level of phosphate ions. In particular, the phosphate salts used in the invention are more soluble than polyphosphates comprising more than two phosphate ions. The polymer of phosphoric groups in polyphosphates is relatively stable in an aqueous solution and does not hydrolyse readily to provide high levels of phosphate ions.

### Examples

Frozen confections were prepared using the formulations shown in Table 1. Examples 1 and 2 demonstrate frozen confections according to the invention. The comparative example is a conventional frozen confection.

**Table 1 - Frozen confections**

| Ingredient (wt%) | Comparative example | Example 1 | Example 2 |
|---|---|---|---|
| Dextrose monohydrate | 5.4 | 5.4 | 5.4 |
| Sucrose | 16.7 | 16.7 | 16.7 |
| Locust bean gum | 0.2 | 0.2 | 0.2 |
| Citric acid | 0.4 | 0.4 | 0.4 |
| Lemon juice concentrate (40°Brix) | 0.7 | 0.7 | 0.7 |
| Flavour | 0.3 | 0.3 | 0.3 |
| Colour | 0.01 | 0.01 | 0.01 |
| Calcium sulphate (CaSO₄) | 0 | 0.2 | 0.4 |
| Sodium dihydrogen phosphate (NaH₂PO₄) | 0 | 0.02 | 0.04 |
| Water | to 100% | to 100% | to 100% |
| pH | 3.1 | 3.1 | 3.1 |

Water ice products in the form of ice lollies (approximately 100mls in volume) on sticks were prepared as follows. First the dry ingredients were mixed with hot water and stirred until they had completely dissolved. The mixes were then pasteurized at 83°C for 20 seconds, cooled to room temperature (18°C) and the pH of each mix was measured. The mixes were poured into moulds immersed in a brine bath at -40°C and sticks were inserted when the mix was partially frozen. After the products had frozen, they were removed from the moulds and stored at -18°C.

Enamel blocks were cut from bovine incisors. Seven blocks were used for each example. They were hand-polished using 9 micron alumina so that the surfaces and edges were uniform. The Knoop hardness of each block was measured using a Mitutoyo MVK-H1 Vickers micro-hardness tester. 16 indents were made per block and the mean value was calculated. The blocks were then placed on mounting poles using ribbon wax; nail varnish was then painted around the edges of the blocks to limit the exposed surface area to the enamel face only. Samples (2 ml) of the water ices of Examples 1 and 2 and the comparative example were cut, placed in 7ml containers and warmed up to 37°C. The enamel blocks were immersed in the melted water ices for 30 minutes. After the treatment the blocks were rinsed with copious amounts of deionised water, and the hardness was measured again. The decrease in hardness was calculated as the percentage difference between the initial hardness before immersion and the final hardness after immersion. The results are given in table 2.

**Table 2 - Change in hardness of tooth enamel**

| | Initial hardness | Final hardness | % Decrease |
|---|---|---|---|
| Comparative example | 198 ± 10 | 132 ± 14 | 33 |
| Example 1 | 202 ± 4 | 169 ± 3 | 16 |
| Example 2 | 202 ± 5 | 167 ± 5 | 17 |

Table 2 shows that there was a large decrease in the hardness of the enamel after exposure to the comparative example (33%) whereas examples 1 and 2 according to the invention resulted in much smaller decreases (16% and 17% respectively). This shows that frozen confections of the invention are more tooth-friendly than conventional frozen confections.

Examples 1 and 2 were tasted and were found to have organoleptic properties comparable to conventional frozen confections.

The various features of the embodiments of the present invention referred to in individual sections above apply, as appropriate, to other sections mutatis mutandis. Consequently features specified in one section may be combined with features specified in other sections as appropriate. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

## Claims

1. A frozen confection having a pH of from 2.7 to 4.7 and comprising:
• at most 1.0 wt% milk protein;
• 0.1.0 to 5.0 wt% of calcium sulphate; and
• 0.1 to 5.0 wt% of citric acid or malic acid or a mixture thereof.

2. A frozen confection according to claim 1 which comprises from 0.01 to 1.0 wt% of a phosphate salt.

3. A frozen confection according to claim 2 wherein the phosphate salt is present in an amount of from 0.02 to 0.1 wt %.

4. A frozen confection according to claim 2 or claim 3 wherein the phosphate salt is a sodium phosphate, potassium phosphate or a mixture thereof

5. A frozen confection according to any of claims 1 to 4 wherein the pH is from 2.8 to 4.0.

6. A frozen confection according to any of claims 1 to 5 wherein the calcium sulphate is present in an amount of from 0.15 to 1.0 wt %.

7. A frozen confection according to any of claims 1 to 6 wherein the total amount of citric acid and malic acid is from 0.15 to 3 wt%.

8. A frozen confection according to any of claims 1 to 7 which comprises at most 1.0 wt% fat.

9. A frozen confection according to any of claims 1 to 8 which is a water ice, fruit ice or sorbet.

10. A process for manufacturing a frozen confection according to any of claims 1 to 9, the process comprising the steps of:
(a) preparing a mix having a pH of from 2.7 to 4.7 and comprising at most 1.0 wt% milk protein, 0.1 to 5.0 wt% of calcium sulphate and 0.1 to 5.0 wt% of citric acid or malic acid or a mixture thereof;
(b) pasteurising and optionally homogenising the mix; then
(c) freezing and optionally aerating the mix to produce the frozen confection.

## Patentansprüche

1. Gefrorene Süßware, die einen pH von 2,7 bis 4,7 hat und
• höchstens 1,0 Gew.-% Milchprotein;
• 0,1 bis 5,0 Gew.-% Calciumphosphat; und
• 0,1 bis 5,0 Gew.-% Citronensäure oder Äpfelsäure oder ein Gemisch davon umfasst.

2. Gefrorene Süßware gemäß Anspruch 1, die 0,01 bis 1,0 Gew.-% eines Phosphatsalzes umfasst.

3. Gefrorene Süßware gemäß Anspruch 2, wobei das Phosphatsalz in einer Menge von 0,02 bis 0,1 Gew.-% vorliegt.

4. Gefrorene Süßware gemäß Anspruch 2 oder Anspruch 3, wobei das Phosphatsalz ein Natriumphosphat, Kaliumphosphat oder ein Gemisch davon ist.

5. Gefrorene Süßware gemäß einem der Ansprüche 1 bis 4, wobei der pH von 2,8 bis 4,0 ist.

6. Gefrorene Süßware gemäß einem der Ansprüche 1 bis 5, wobei das Calciumphosphat in einer Menge von 0,15 bis 1,0 Gew.-% vorliegt.

7. Gefrorene Süßware gemäß einem der Ansprüche 1 bis 6, wobei die Gesamtmenge an Citronensäure und Äpfelsäure 0,15 bis 3 Gew.-% ist.

8. Gefrorene Süßware gemäß einem der Ansprüche 1 bis 7, die höchstens 1,0 Gew.-% Fett umfasst.

9. Gefrorene Süßware gemäß einem der Ansprüche 1 bis 8, die Wassereis, Fruchteis oder Sorbet ist.

10. Verfahren zur Herstellung einer gefrorenen Süßware gemäß einem der Ansprüche 1 bis 9, wobei das Verfahren die Schritte:
(a) Herstellen einer Mischung, die einen pH von 2,7 bis 4,7 hat und die höchstens 10 Gew.-% Milchprotein, 0,1 bis 5,0 Gew.-% Calciumsulfat und 0,1 bis 5,0 Gew.-% Citronensäure oder Äpfelsäure oder ein Gemisch davon umfasst;
(b) Pasteurisieren und gegebenenfalls Homogenisieren der Mischung, danach
(c) Gefrieren und gegebenenfalls Schäumen der Mischung unter Herstellung der gefrorenen Süßware
umfasst.

## Revendications

1. Préparation sucrée congelée ayant un pH de 2,7 à 4,7 et comprenant :
• au plus, 1,0 % en poids de protéine de lait ;
• 0,1 à 5,0 % en poids de sulfate de calcium ; et
• 0,1 à 5,0 % en poids d'acide citrique ou d'acide malique ou d'un mélange des deux.

2. Préparation sucrée congelée selon la revendication 1 qui comprend de 0,01 à 1,0 % en poids d'un sel de phosphate.

3. Préparation sucrée congelée selon la revendication 2, dans laquelle le sel de phosphate est présent en une quantité de 0,02 à 0,1 % en poids.

4. Préparation sucrée congelée selon la revendication 2 ou la revendication 3, dans laquelle le sel de phosphate est un phosphate de sodium, un phosphate de potassium ou un mélange des deux.

5. Préparation sucrée congelée selon l'une quelconque des revendications 1 à 4, dans laquelle le pH est de 2,8 à 4,0.

6. Préparation sucrée congelée selon l'une quelconque des revendications 1 à 5, dans laquelle le sulfate de calcium est présent en une quantité de 0,15 à 1,0 % en poids.

7. Préparation sucrée congelée selon l'une quelconque des revendications 1 à 6, dans laquelle la quantité totale d'acide citrique et d'acide malique est de 0,15 à 3 % en poids.

8. Préparation sucrée congelée selon l'une quelconque des revendications 1 à 7 qui comprend au plus 1,0 % en poids de matières grasses.

9. Préparation sucrée congelée selon l'une quelconque des revendications 1 à 8 qui est une glace à l'eau, une glace aux fruits ou un sorbet.

10. Procédé de préparation d'une préparation sucrée congelée selon l'une quelconque des revendications 1 à 9, le procédé comprenant les étapes consistant à :
(a) préparer un mélange ayant un pH de 2, 7 à 4, 7 et comprenant au plus 1,0 % en poids de protéine de lait, 0,1 à 5,0 % en poids de sulfate de calcium et 0,1 à 5,0 % en poids d'acide citrique ou d'acide malique ou d'un mélange des deux ;
(b) pasteuriser et éventuellement homogénéiser le mélange ; puis
(c) congeler et éventuellement aérer le mélange pour obtenir le préparation sucrée congelée.
